Europäisches Patentamt

European Patent Office

Office européen des brevets

(19)

(11) Numéro de publication : **0 083 266**
**B1**

# (12) FASCICULE DE BREVET EUROPÉEN

(45) Date de publication du fascicule du brevet :
**30.10.85**

(21) Numéro de dépôt : **82402299.0**

(22) Date de dépôt : **15.12.82**

(51) Int. Cl.⁴ : **F 01 D 25/18, F 16 C 37/00**

(54) **Turbomachine multi-corps comportant un palier inter-arbres.**

(30) Priorité : **22.12.81 FR 8123900**

(43) Date de publication de la demande :
**06.07.83 Bulletin 83/27**

(45) Mention de la délivrance du brevet :
**30.10.85 Bulletin 85/44**

(84) Etats contractants désignés :
**DE FR GB SE**

(56) Documents cités :
**FR-A- 1 384 980**
**FR-A- 2 484 574**
**GB-A- 803 050**
**US-A- 2 652 294**
**US-A- 3 393 024**

(73) Titulaire : **SOCIETE NATIONALE D'ETUDE ET DE
CONSTRUCTION DE MOTEURS D'AVIATION,
"S.N.E.C.M.A."**
**2 Boulevard Victor**
**F-75015 Paris (FR)**

(72) Inventeur : **Crozet, François Emile Georges**
**Les rives de l'Yerres Bt C2 rue P. de Coubertin**
**F-91330 Yerres (FR)**
Inventeur : **Kervistin, Robert**
**215, rue Aristide Briand**
**F-77350 Le Mee sur Seine (FR)**
Inventeur : **Lardellier, Alain Marie Joseph**
**1, rue Augereau**
**F-77000 Melun (FR)**
Inventeur : **Mazeaud, Georges**
**Les rives de l'Yerres Bt B3**
**F-91330 Yerres (FR)**

(74) Mandataire : **Moinat, François**
**S.N.E.C.M.A. Service des Brevets Boîte Postale 81**
**F-91003 Evry Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une turbomachine multi-corps comportant un palier inter-arbres pourvue de moyens pour le pilotage des jeux du palier.

Les turbomachines du type multi-corps comportent un palier qui supporte en rotation un premier arbre par rapport à un second arbre et qui comprend de manière générale un roulement à rouleaux insérés entre une bague extérieure montée sur le premier arbre et une bague intérieure montée sur le second arbre. De manière plus précise, le premier arbre placé du côté extérieur peut être constitué par le tourillon de la ligne d'arbre du corps haute pression et le second arbre placé du côté intérieur peut être constitué par le tourillon de la ligne d'arbre du corps basse pression. Pour tenter d'obtenir un fonctionnement satisfaisant d'un palier de ce type, les dispositions les plus efficaces doivent être recherchées pour le graissage et le refroidissement du roulement.

Le brevet français n° 2 001 380 déposé le 24 janvier 1969 indique quelques-unes de ces solutions. Ce brevet concerne un moteur à turbine à gaz dans lequel un premier palier supporte un arbre de compresseur par rapport à un support de palier fixe et un second palier supporte le même arbre par rapport à un arbre court porté par l'arbre de ventilateur. Le lubrifiant est alimenté vers trois groupes de rainures axiales situées sous la bague intérieure du roulement à partir d'une région commune et distribué aux différentes zones amont et aval par des perçages radiaux de ladite bague intérieure. Le second palier est alimenté par le lubrifiant ayant passé par certaines des rainures du premier palier.

Le brevet français n° 2 208 050 déposé le 23 novembre 1973 donne une autre illustration des solutions apportées. Comme décrit par ce brevet, l'écrou de serrage de la bague intérieure d'un roulement de palier comporte sur sa face interne un logement annulaire alimenté en huile qui est ensuite distribuée sur la bague intérieure pour assurer le graissage et le refroidissement des éléments de roulement d'où elle passe sur la bague extérieure.

Le document FR-A-1 384 980 décrit un palier inter-arbres de turbomachine multi-corps composé d'un premier arbre du corps haute pression, d'un second arbre du corps basse pression et d'un roulement présentant une bague extérieure montée à l'intérieur d'un manchon monté à l'intérieur du premier arbre et une bague intérieure montée sur le second arbre. Des rainures sont ménagées sur la surface circonférentielle extérieure de la bague extérieure du roulement et à la sortie de ces rainures l'huile de refroidissement est acheminée vers une chambre annulaire par des perforations du premier arbre. Selon ce document, le courant de lubrifiant est ainsi divisé pour assurer à la fois la lubrification et le refroidissement du roulement.

Ces modes antérieurs de construction de palier ne donnent pas toutefois entière satisfaction et laissent subsister certains problèmes non résolus. Ceci apparaît particulièrement dans certaines applications aux turbomachines multi-corps qui demandent un niveau élevé de performances entraînant des conditions sévères d'utilisation. Ainsi, l'environnement du palier est soumis à des dilatations d'origine centrifuges et thermiques et dans l'application envisagée ci-dessus où dans une turbomachine multi-corps un palier est monté entre un tourillon de la ligne d'arbre du corps haute pression placé du côté extérieur et un tourillon de la ligne d'arbre du corps basse pression placé du côté intérieur, malgré des précautions de montage avec serrage et malgré l'application des solutions connues de graissage et de refroidissement du roulement de palier, un jeu important a été observé en fonctionnement aux régimes maximaux de rotation.

D'autres solutions techniques dont une est illustrée par exemple par le document FR-A-2 484 574 sont applicables aux paliers du type envisagé et permettent également d'obtenir un amortissement des vibrations des arbres et du roulement par utilisation d'une pellicule d'huile sous pression formée sur une bague de roulement. Mais ces solutions se révèlent également insuffisantes pour combattre l'apparition de jeux trop importants en fonctionnement qui sont fortement préjudiciables à la tenue mécanique de ces paliers.

Afin d'éviter les inconvénients des solutions connues, l'objet de l'invention tout en conservant l'acquis intéressant des techniques antérieures comme il a été noté ci-dessus est de construire un palier inter-arbres de turbomachine multi-corps comportant un palier inter-arbres pourvue de moyens de pilotage des jeux visant à réduire les jeux du palier en fonctionnement. Ce résultat est obtenu par une turbomachine multi-corps comportant un palier inter-arbres du type supportant en rotation un premier arbre placé du côté extérieur et constitué par le tourillon de la ligne d'arbre du corps haute pression par rapport à un second arbre placé du côté intérieur et constitué par le tourillon de la ligne d'arbre du corps basse pression et comprenant un roulement à rouleaux insérés entre une bague extérieure montée directement sur le premier arbre et une bague intérieure montée sur le second arbre. Le tourillon haute pression comporte une série de rainures usinées sur l'alésage du tourillon, alimentées en huile froide et qui communiquent directement dans ledit tourillon avec une série de perçages longitudinaux ménagés dans ledit tourillon au même niveau longitudinal que lesdites rainures et dans lesquels circule l'huile de refroidissement, de manière que cet ensemble constitue un dispositif de pilotage des jeux dudit palier inter-arbres.

Grâce à ce dispositif, la bague extérieure du roulement et son logement dans le tourillon haute pression sont activement refroidis par la circulation interne de l'huile dans le tourillon haute pression par des canaux de diamètre important selon un trajet aller-retour. Cet abaissement de la température de la bague extérieure du palier amène une réduction importante des jeux du palier observés en fonctionnement aux régimes maximaux de rotation, ce qui entraîne une nette amélioration de la durée de vie du palier. L'obtention de bons résultats est assurée par l'utilisation pour le refroidissement d'huile à basse température provenant du système d'alimentation en huile du palier.

Ce résultat est encore amélioré par une disposition avantageuse de l'invention selon laquelle l'air de ventilation du palier passant par un joint à labyrinthe porté par la bague intérieure du roulement du côté amont par rapport au sens de circulation des gaz dans la turbomachine passe par des rainures longitudinales sous la bague intérieure et traverse ladite bague intérieure par des passages radiaux. De cette façon, dans les conditions de rotation où apparaissent des jeux de fonctionnement, la bague intérieure est réchauffée, ce qui contribue à diminuer les jeux du palier.

D'autres caractéristiques et avantages de l'invention seront mieux compris à la lecture de la description qui va suivre d'un mode de réalisation et en se référant aux dessins annexés sur lesquels :

la figure 1 est une vue en coupe axiale de la partie d'une turbomachine multi-corps où est situé le dispositif de pilotage des jeux d'un palier inter-arbres suivant l'invention,

la figure 2 est une vue à plus grande échelle en coupe axiale du dispositif représenté à la figure 4,

la figure 3 est une vue partielle en section suivant la ligne 3-3 du dispositif représenté à la figure 2,

la figure 4 est une vue en coupe suivant la ligne 4-4 de la figure 3,

la figure 5 est une vue du dispositif similaire à la vue représentée à la figure 2 mais en coupe axiale selon un plan différent,

la figure 6 est une vue partielle en section suivant la ligne 6-6 du dispositif représenté à la figure 2,

la figure 7 est une vue du dispositif similaire à la vue représentée à la figure 2 montrant une variante de réalisation de l'invention.

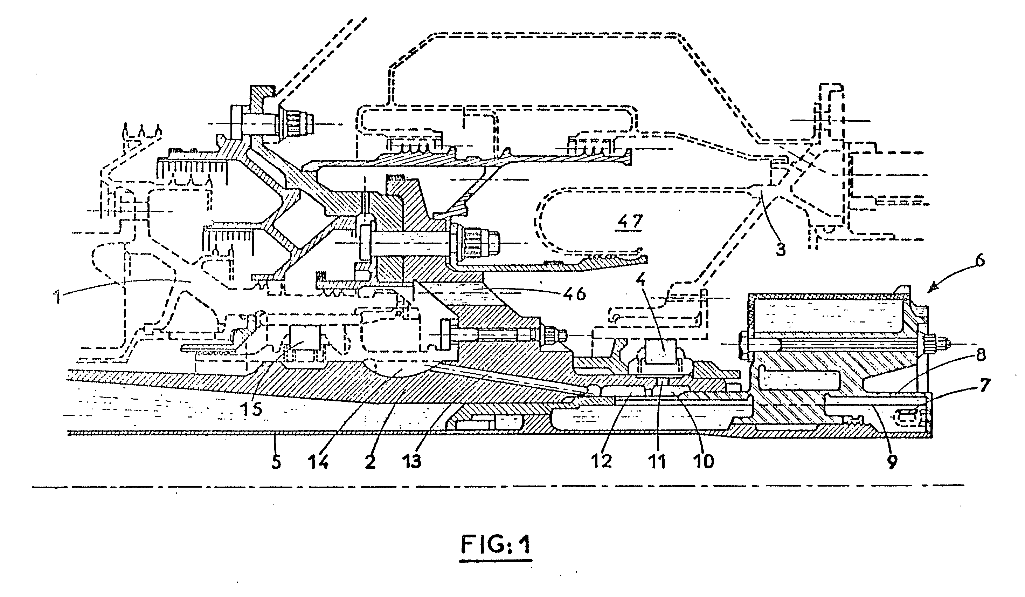

A la figure 1 on a représenté en coupe axiale une partie d'une turbomachine multi-corps où se trouvent un premier arbre 1 qui est le tourillon de la ligne d'arbre du corps haute pression et un second arbre 2 qui est le tourillon de la ligne d'arbre du corps basse pression. Ce second arbre 2 est supporté en rotation par un palier 4 par rapport à un support fixe 3 de palier lié à un carter de la turbomachine. A l'extrémité de ce second arbre 2 et sur un tube interne 5 est monté un déshuileur 6 du type centrifuge. Ce déshuileur 6 comprend un gicleur d'huile 7 et une virole interne 8 sur laquelle des cloisons longitudinales 9 divisent deux secteurs. Le second arbre 2 comporte un premier collecteur annulaire 10 et des perçages 11 au droit du palier 4 et un second collecteur annulaire 12 adjacent au premier et relié par des perçages 13 usinés dans le second arbre 2 à un troisième collecteur annulaire 14 sur la surface externe de l'arbre 2. Le premier arbre 1 est également supporté en rotation par rapport au second arbre 2 par un palier inter-arbres 15 qui est muni du dispositif de pilotage des jeux conforme à l'invention.

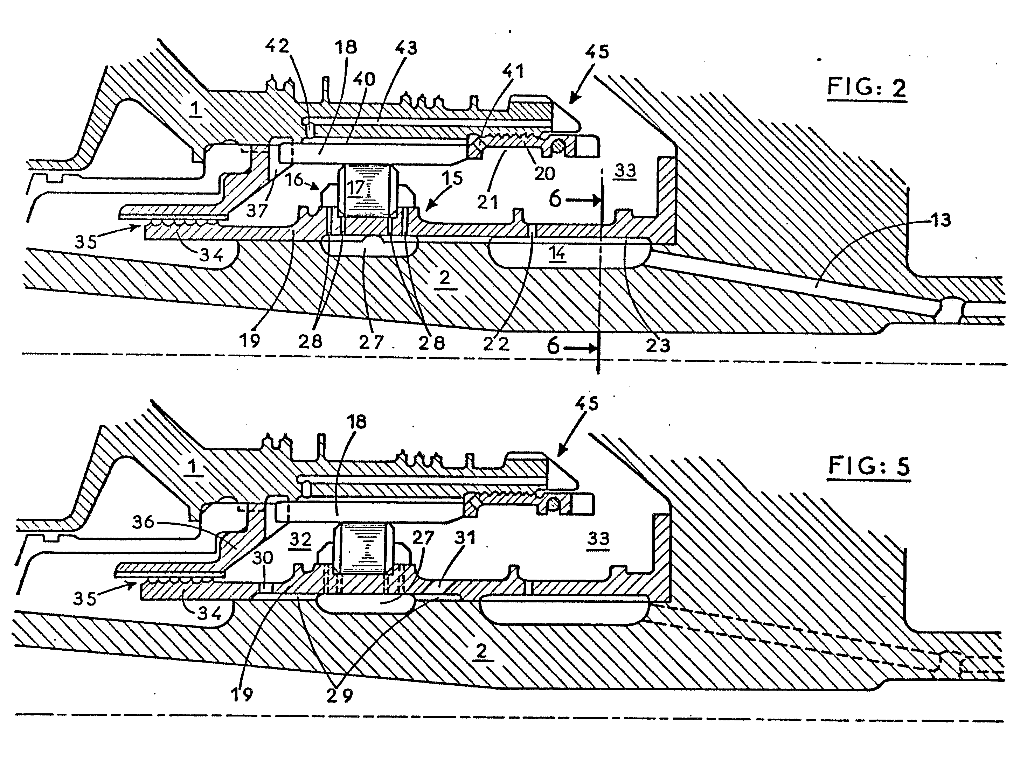

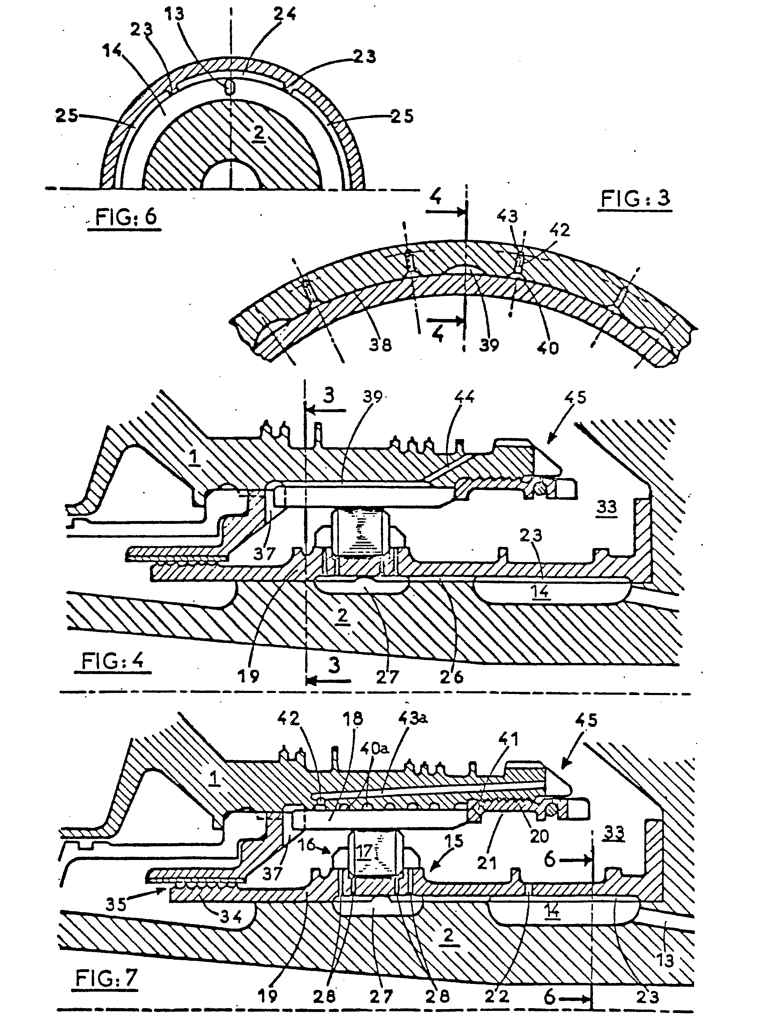

Le palier 15 représenté à une plus grande échelle aux figures 2 à 6 comprend un roulement 16 dont les rouleaux 17 sont insérés entre une bague extérieure 18 et une bague intérieure 19 entre les pistes desquelles ils roulent. La bague extérieure 18 est montée directement sans faire appel à un boîtier intermédiaire sur le premier arbre 1 sur lequel la bague 18 est fixée par un écrou de serrage 20 du côté aval par rapport au sens de circulation des gaz dans la turbomachine. Cet écrou 20 comporte un logement annulaire 21. La bague intérieure 19 est montée sur le second arbre 2. La bague intérieure 19 comporte des perçages radiaux 22 au niveau du collecteur annulaire 14 disposé entre l'arbre 2 et la bague intérieure 19 et la bague 19 comporte également à ce niveau des cloisons longitudinales 23 formant sur la surface interne de la bague 19 quatre secteurs répartis suivant la représentation donnée à la figure 6, deux secteurs 24 et deux secteurs 25.

Les deux secteurs 24 correspondent aux perçages radiaux 22 de la bague 19 et les deux autres secteurs 25 communiquent par des rainures longitudinales 26 de l'arbre 2 avec un quatrième collecteur annulaire 27 à la surface de l'arbre 2 sous la bague intérieure 19 au droit des rouleaux 17 du roulement. La bague intérieure 19 comporte au niveau du collecteur 27 et de manière non représentée au dessin analogue à ce qui a été décrit ci-dessus pour le collecteur 14 des cloisons longitudinales formant des secteurs. Certains secteurs correspondent à des perçages radiaux 28 dans la bague 19 partant du collecteur 27 vers les surfaces de portée des rouleaux 17. Comme cela est plus nettement représenté à la figure 5, la bague intérieure 19 comporte également du côté interne des fraisages longitudinaux 29 correspondant à une deuxième série desdits secteurs et des passages radiaux amont 30 et aval 31 débouchent respectivement dans les enceintes amont 32 et aval 33 du roulement. La bague intérieure 19 porte à son extrémité amont 34 par rapport au sens de circulation des gaz dans la turbomachine un joint à labyrinthe 35 formé entre ladite extrémité 34 de la bague intérieure 19 et une pièce d'appui 36 côté amont de la bague extérieure 18. Cette pièce d'appui 36 ferme l'enceinte amont 32 du roulement et comporte des rainures radiales 37 sur sa face de contact avec la bague extérieure 18. L'alésage 38 du tourillon haute pression 1 comporte dans la zone située au droit de la bague extérieure 18 une première série de rainures longitudinales 39. Ces rainures 39 ont, dans le mode de réalisation représenté, une section en lunule et sont au nombre de dix et elles communiquent par des perçages obliques 44 traversant le tourillon haute pression 1 avec l'enceinte aval extérieure 33 du palier. Dans le mode de réalisation conforme à l'invention ledit alésage 38 du tourillon haute pression 1 comporte également une deuxième série de rainures 40 en forme de lunule. Ces rainures 40 communiquent côté aval avec des perçages 41 de l'écrou de serrage 20 de la bague extérieure 18 partant du logement annulaire 21 dudit écrou 20. Côté amont, ces rainures 40 communiquent par des trous radiaux 42 avec une série de perçages longitudinaux parallèles 43. Ces perçages 43 débouchent côté aval à l'extrémité aval 45 du tourillon haute pression 1 dans l'enceinte aval extérieure 33 du palier.

Selon une variante de réalisation de l'invention représentée à la figure 7, les perçages longitudinaux 43a du tourillon haute pression 1 sont obliques et inclinés sur l'axe de la turbomachine dans une direction s'écartant de cet axe dans le sens allant de l'amont vers l'aval de la turbomachine. De plus, les rainures 40a usinées sur l'alésage 38 du tourillon haute pression 1 sont disposées en forme d'hélices.

On va maintenant décrire le fonctionnement du dispositif de pilotage des jeux conforme à l'invention dans le mode de réalisation qui vient d'être décrit d'un palier inter-arbres de turbomachine multi-corps. La description de ce mode de fonctionnement permet de préciser certaines caractéristiques de l'invention et de relever les avantages obtenus.

L'alimentation en huile est assurée par le déshuileur centrifuge 6 avec son gicleur 7. Ce gicleur 7 envoie l'huile par centrifugation sur la virole 8 du déshuileur. A la sortie du déshuileur 6, l'anneau d'huile est divisé en deux secteurs par les cloisons longitudinales 9. Par des perçages non représentés au dessin, l'huile parvient au premier collecteur annulaire 10 et au second collecteur annulaire 12. De cette façon deux circuits d'alimentation en huile sont créés pour lesquels les débits sont dosés et la répartition assurée grâce auxdites cloisons 9 et par le calibrage des perçages. Un premier circuit à partir du premier collecteur 10 alimente le palier 4 par les perçages 11 du tourillon basse pression 2 et assure ainsi le graissage et le refroidissement du roulement dudit palier 4. Un second circuit d'huile à partir du second collecteur 12 assure deux fonctions essentielles :

d'une part, il assure le graissage du palier 15 ainsi que le refroidissement du roulement 16 de palier,

d'autre part, l'huile constitue l'agent principal utilisé dans le dispositif de pilotage des jeux du palier inter-arbres 15 de turbomachine multi-corps suivant le mode de réalisation conforme à l'invention.

Pour assurer ces deux fonctions, le circuit d'huile au niveau du palier inter-arbres 15 se subdivise en deux circuits. En effet, le second collecteur 12 alimente les perçages 13 usinés dans le tourillon basse pression 2 vers le troisième collecteur annulaire 14 dans lequel les cloisons longitudinales 23 répartissent l'huile en quatre secteurs 24 et 25 qui alimentent les deux circuits suivants :

dans un premier circuit du palier inter-arbres 15, l'huile est acheminée à partir des secteurs 25 par les rainures 26 vers le quatrième collecteur 27 et de là, par les perçages radiaux 28, l'huile parvient sur les surfaces de portée des rouleaux 17 du palier 15 et par centrifugation, l'huile parvient sur la bague extérieure 18 du roulement, assurant ainsi le graissage du palier 15 et le refroidissement du roulement 16 de palier,

dans un deuxième circuit du palier inter-arbres 15, l'huile passe à partir des secteurs 24 par les perçages radiaux 22 de la bague intérieure 19 de roulement par centrifugation dans le logement annulaire 21 de l'écrou 20 et par les perçages 41 dudit écrou 20 l'huile entre dans la série de rainures longitudinales 40 ou hélicoïdales 40a du tourillon haute pression 1, puis par les trous radiaux 42 l'huile circule à cœur dudit tourillon haute pression 1 dans la série de perçages longitudinaux parallèles 43 ou perçages obliques 43a.

La variante prévoyant une forme en hélices des rainures 40a sur l'alésage 38 du tourillon haute pression 1 présente l'avantage de réduire les contraintes subies par la bague extérieure 18 au passage des rouleaux 17. De plus, la variante prévoyant la réalisation des perçages obliques 43a permet une meilleure circulation de l'huile de refroidissement en créant dans ces perçages 43a un champ centrifuge qui permet de déloger les particules métalliques et les boues qui pourraient s'y déposer.

Le retour de l'huile, d'une part, ayant circulé dans le tourillon haute pression 1 à la sortie des perçages 43 et d'autre part, à partir du roulement 16 en passant par les rainures radiales 37, les rainures longitudinales 39 et les perçages obliques 44, s'effectue à partir de l'enceinte aval extérieure 33 du palier par des passages 46 percés dans le tourillon basse pression 2 vers les collecteurs de récupération dans une enceinte extérieure 47, comme représenté à la figure 1, et de là par des moyens connus, non représentés, vers le réservoir d'huile.

Le pilotage des jeux du palier inter-arbres est obtenu par la réduction des dilatations d'origine thermique. En effet, aux régimes maximaux de fonctionnement de la turbomachine, se produit un échauffement important du tourillon haute pression alors que l'élévation de température subie par le tourillon basse pression est nettement moins importante. En l'absence du dispositif de pilotage de jeux du palier conforme à l'invention, l'apparition de jeux excessifs et fortement préjudiciables à la tenue mécanique du palier inter-arbres est ainsi due aux écarts de température existants entre partie extérieure du palier, côté du tourillon haute pression et partie intérieure du palier du côté du tourillon basse pression. La circulation d'huile froide dans le tourillon haute pression par des canaux de diamètre important, à des débits relativement élevés et couvrant toute la largeur du palier qui est obtenue par le dispositif conforme à l'invention procure un refroidissement énergique du tourillon haute pression, ce qui permet de réduire les écarts de température aux régimes maximaux de fonctionnement de la turbomachine entre partie extérieure et partie intérieure du palier inter-arbres. Ce résultat est encore renforcé par la disposition complémentaire avantageuse du dispositif de pilotage des jeux du palier inter-arbres selon l'invention. En effet, une circulation d'air est utilisée comme second agent dans ledit dispositif de pilotage des jeux. Cet air, à température plus élevée que celle de la partie intérieure du palier inter-arbres et qui est cependant utilisé par ailleurs à partir des fuites établies au joint à labyrinthe amont 35 pour le refroidissement du roulement 16 et des parties chaudes du palier 15, circule à travers les fraisages longitudinaux 29 en passant par les passages radiaux amont 30 et aval 31. Cet air procure ainsi un réchauffement de la bague intérieure 19, ce qui contribue à diminuer les jeux du palier durant les phases de fonctionnement de la turbomachine où la partie intérieure du palier est froide par rapport à la partie extérieure.

Le dispositif de pilotage des jeux d'un palier décrit ci-dessus selon un mode particulier de réalisation est bien entendu susceptible de nombreuses autres applications et dans des modes différents dont la réalisation est à la portée de l'homme du métier. Parmi ces variantes qui ne seront pas représentées ni décrites plus en détail, le joint à labyrinthe amont 35 peut être porté par un écrou amont de serrage de la bague intérieure du roulement de palier, cette bague étant par exemple contenue dans un boîtier intérieur de roulement.

## Revendications

1. Turbomachine multi-corps comportant un palier inter-arbres (15) du type supportant en rotation un premier arbre (1) placé du côté extérieur et constitué par le tourillon de la ligne d'arbre du corps haute pression par rapport à un second arbre (2) placé du côté intérieur et constitué par le tourillon de la ligne d'arbre du corps basse pression et comprenant un roulement (16) à rouleaux (17) insérés entre une bague extérieure (18) montée directement sur le premier arbre (1) et une bague intérieure (19) montée sur le second arbre (2) caractérisé en ce que le tourillon haute pression (1) comporte une série de rainures (40, 40a) usinées sur l'alésage (38) du tourillon, alimentées en huile froide et qui communiquent directement dans ledit tourillon (1) avec une série de perçages longitudinaux (43, 43a) ménagés dans ledit tourillon (1) au même niveau longitudinal que lesdites rainures (40, 40a) et dans lesquels circule l'huile de refroidissement, de manière que cet ensemble constitue un dispositif de pilotage des jeux dudit palier inter-arbres (15).

2. Turbomachine multi-corps comportant un palier inter-arbres (15) selon la revendication 1 caractérisé en ce que les perçages longitudinaux (43a) du tourillon haute pression (1) sont orientés dans une direction oblique inclinée sur l'axe de la turbomachine en s'écartant de cet axe dans le sens de circulation de l'huile de l'amont vers l'aval.

3. Turbomachine multi-corps comportant un palier inter-arbres (15) selon la revendication 1, caractérisé en ce que les perçages longitudinaux (43) du tourillon haute pression (1) sont parallèles à l'axe de la turbomachine.

4. Turbomachine multi-corps comportant un palier inter-arbres (15) selon l'une quelconque des revendications 1 à 3, caractérisé en ce que les rainures (40) usinées sur l'alésage (38) du tourillon haute pression (1) sont longitudinales et parallèles à l'axe de la turbomachine.

5. Turbomachine multi-corps comportant un palier inter-arbres (15) selon l'une quelconque des revendications 1 à 3, caractérisé en ce que les rainures (40a) usinées sur l'alésage (38) du tourillon haute pression (1) sont disposées en forme d'hélices.

6. Turbomachine multi-corps comportant un palier inter-arbres (15) selon l'une quelconque des revendications 1 à 5, caractérisé en ce que l'air de ventilation du palier (15) passant par un joint à labyrinthe (35) porté par la bague intérieure (19) du roulement (16) du côté amont par rapport au sens de circulation des gaz dans la turbomachine passe des rainures longitudinales (29) sous la bague intérieure (19) et traverse ladite bague intérieure (19) par des passages radiaux amont (30) et aval (31) de sorte que ladite bague intérieure (19) de roulement est réchauffée durant les phases de fonctionnement de la turbomachine aux régimes maximaux.

7. Turbomachine multi-corps comportant un palier inter-arbres (15) selon l'une quelconque des revendications 1 à 6, caractérisé en ce que l'huile froide alimentant les rainures (40, 40a) et les perçages (43, 43a) du tourillon haute pression (1) est distribué par un gicleur (7) qui envoie l'huile sur la virole (8) d'un déshuileur centrifuge (6) monté à l'extrémité aval du tourillon basse pression (2) et dans lequel l'anneau d'huile est divisé au moyen de cloisons longitudinales (9) en deux circuits, un premier circuit alimentant à partir d'un premier collecteur annulaire (10) situé sur le tourillon basse pression (2) et par des perçages (11) du tourillon basse pression (2) un palier (4) de support dudit tourillon basse pression (2) par rapport à une pièce de support (3) fixe et un second circuit alimentant à partir d'un second collecteur annulaire (12) adjacent au premier collecteur (10) et situé sur le tourillon basse pression (2) et par des perçages (13) du tourillon basse pression (2), un troisième collecteur annulaire (14) au niveau du palier inter-arbres (15) d'où une partie de l'huile passe par centrifugation par des perçages radiaux (22) de la bague intérieure (19) du roulement (16) vers un logement annulaire (21) de l'écrou aval (20) de serrage de la bague extérieure (18) du roulement (16) qui alimente lesdites rainures (40, 40a) et lesdits perçages (43, 43a) du tourillon haute pression (1) par des perçages (41) dudit écrou (20).

8. Turbomachine multi-corps comportant un palier inter-arbres (15) selon l'une quelconque des revendications 1 à 7, caractérisé en ce que le troisième collecteur annulaire (14) situé sur le tourillon basse pression (2) et sous la bague intérieure (19) du roulement (16) comporte des cloisons longitudinales (23) usinées dans ladite bague intérieure (19) répartissant l'huile entre l'alimentation du tourillon haute pression (1) et un circuit de graissage du palier inter-arbres (15) dans lequel l'huile est acheminée par des rainures longitudinales (26) du tourillon basse pression (2) dans un quatrième collecteur (27) situé sur le tourillon basse pression (2) sous la bague intérieure (19) d'où elle atteint les rouleaux (17) par des perçages radiaux (28) de la bague intérieure (19) et par centrifugation la bague extérieure (18) du roulement (16).

9. Turbomachine multi-corps comportant un palier inter-arbres (15) selon l'une quelconque des revendications 1 à 8 caractérisé en ce que à la sortie de la deuxième série de perçages (43, 43a) internes du tourillon haute pression et à la sortie de canaux (39) recueillant l'huile de graissage du palier (15) sur l'alésage (38) du tourillon haute pression (1) l'huile rejoint vers l'aval par des passages (46) dans le tourillon basse pression (2) une enceinte de récupération (47).

**Claims**

1. Multi-spool turbo-machine comprising an inter-shaft bearing (15) of the type which supports in rotation a first shaft (1) disposed externally and constituted by the journal of the shaft line of the high pressure spool relative to a second shaft (2) disposed internally and constituted by the journal of the shaft line of the low pressure spool and comprising a bearing (16) with rollers (17) inserted between an outer race (18) mounted directly on the first shaft (1) and an inner race (19) mounted on the second shaft (2), characterised in that the high pressure journal (1) comprises a number of grooves (40, 40a) machined in the bore (38) of the journal, which are supplied with cool oil and are in direct communication in said journal (1) with a number of longitudinal bores (43, 43a) made in said journal (1) at the same longitudinal zone as said grooves (40, 40a) and in which the cooling oil circulates, so that the assembly constitutes a control device for the clearances of said inter-shaft bearing (15).

2. Multi-spool turbo-machine comprising an inter-shaft bearing (15) according to claim 1, characterised in that the longitudinal bores (43a) of the high pressure journal (1) are orientated in a direction inclined to the axis of the turbo-machine, extending away from said axis in the direction of circulation of the oil from upstream downstream.

3. Multi-spool turbo-machine comprising an inter-shaft bearing (15) according to claim 1, characterised in that the longitudinal bores (43) of the high pressure journal (1) are parallel to the axis of the turbo-machine.

4. Multi-spool turbo-machine comprising an inter-shaft bearing (15) according to any one of claims 1 to 3, characterised in that the grooves (40) machined on the bore (38) of the high pressure journal (1) are longitudinal and parallel with the axis of the turbo-machine.

5. Multi-spool turbo-machine comprising an inter-shaft bearing (15) according to any one of claims 1 to 3, characterised in that the grooves (40a) machined in the bore (38) of the high pressure journal (1) extend helically.

6. Multi-spool turbo-machine comprising an inter-shaft bearing (15) according to any one of claims 1 to 5, characterised in that the air for the ventilation of the bearing (15) passing through a labyrinth seal (35) supported by the inner race (19) of the bearing (16) on the upstream side with respect to the direction of circulation of the gases in the turbo-machine passes along longitudinal grooves (29) beneath the inner race (19) and passes through said inner race (19) along radial upstream (30) and downstream (31) passages so that said inner roller race (19) is heated during the phases of operation of the turbo-machine at maximum ratings.

7. Multi-spool turbo-machine comprising an inter-shaft bearing (15) according to any one of claims 1 to 6, characterised in that the cool oil supplying the grooves (40, 40a) and the bores (43, 43a) of the high pressure journal (1) is dispensed by a nozzle (7) which directs the oil onto the cylindrical part (8) of a centrifugal de-oiler (6) mounted at the down-stream end of the low pressure journal (2) and in which the oil circuit is divided by means of longitudinal partitions (9) into two circuits, a first circuit supplying from a first annular collector (10) situated on the low pressure journal (2) and through bores (11) through the low pressure journal (2) a bearing (4) supporting said low pressure journal (2) relative to a fixed supporting member (3) and a second circuit supplying from a second annular collector (12) adjacent to the first collector (10) and situated on the low pressure journal (2) and through bores through the low pressure journal (2), a third annular collector (14) at the level of the inter-shaft bearing (15) whence part of the oil passes centrifugally through radial perforations (22) of the inner race (19) of the roller bearing (16) towards a ring housing (21) of the downstream nut (20) for clamping the outer race (18) of the roller bearing (16) which supplies said grooves (40, 40a) and said bores (43, 43a) of the high pressure journal (1) through bores (41) through said nut (20).

8. Multi-spool turbo-machine comprising an inter-shaft bearing (15) according to any one of claims 1 to 7, characterised in that the third annular collector (14) situated on the low pressure journal (2) and beneath the inner race (19) of the roller bearing (16) has longitudinal partitions (23) machined in said innerrace (19) distributing the oil between the supply of the high pressure journal (1) and a lubrication circuit of the inter-shaft bearing (15) into which the oil is conducted along longitudinal grooves (26) of the low pressure journal (2) in a fourth collector (27) situated on the low pressure journal (2) beneath the inner race (19) whence it reaches the rollers (17) along radial bores (28) through the inner ring (19) and centrifugally, the outer race (18) of the roller bearing (16).

9. Multi-spool turbo-machine comprising an inter-shaft bearing (15) according to any one of claims 1 to 8, characterised in that at the outflow of the second set of bores (43, 43a) in the high pressure journal and at the outflow of channels (39) collecting the oil lubricating the bearing (15) on the bore of the high pressure journal (1), the oil reaches a recovery area (47) downstream, through passages (46) in the low pressure journal (2).

## Patentansprüche

1. Mehrwellenturbomaschine mit einem Zwischenwellenlager (15), in welchem eine außen angeordnete, von dem Zapfen des Wellenstrangs des Hochdruckkörpers gebildete erste Welle (Hochdruckwellenzapfen 1) gegenüber einer innen angeordneten, von dem Zapfen des Wellenstrangs des Niederdruckkörpers gebildeten zweiten Welle (Niederdruckwellenzapfen 2) drehbar gelagert ist, und das ein Rollenlager (16, 17) umfaßt, dessen Rollen (17) zwischen einem unmittelbar auf der ersten Welle (1) montierten Außenring (18) und einem auf der zweiten Welle (2) montierten Innenring (19) gefaßt sind, dadurch gekennzeichnet, daß der Hochdruckwellenzapfen (1) eine Reihe von Nuten (40, 40a) aufweist, die in der Lagerbohrung (38) des Hochdruckwellenzapfens angebracht sind, denen kaltes Öl zugeführt wird und die in dem Hochdruckwellenzapfen (1) direkt mit einer Reihe von longitudinalen Bohrungen (43, 43a) in Verbindung stehen, welche in dem Hochdruckwellenzapfen (1) in Längsrichtung auf demselben Niveau angebracht sind wie die Nuten (40, 40a) und in denen das Kühlöl zirkuliert, so daß die Gesamtheit dieser Teile eine Vorrichtung zur Regulierung der Spiele des genannten Zwischenwellenlagers (15) bildet.

2. Mehrwellenturbomaschine mit einem Zwischenwellenlager (15) nach Anspruch 1, dadurch gekennzeichnet, daß die longitudinalen Bohrungen (43a) des Hochdruckwellenzapfen (1) gegenüber der Achse der Turbomaschine schief geneigt sind, wobei ihr Abstand von dieser Achse in Zirkulationsrichtung des Öls von der stromaufwärts gelegenen zu der stromabwärts gelegenen Seite größer wird.

3. Mehrwellenturbomaschine mit einem Zwischenwellenlager (15) nach Anspruch 1, dadurch gekennzeichnet, daß die longitudinalen Bohrungen (43) des Hochdruckwellenzapfens (1) parallel zur Achse des Turbomaschine verlaufen.

4. Mehrwellenturbomaschine mit einem Zwischenwellenlager (15) nach einem der Ansprüche 1 bis 3, dadurch gekennzeichnet, daß die in der Lagerbohrung (38) des Hochdruckwellenzapfens (1) angebrachten Nuten (40) Längsnuten sind, die parallel zur Achse der Turbomaschine verlaufen.

5. Mehrwellenturbomaschine mit einem Zwischenwellenlager (15) nach einem der Ansprüche 1 bis 3, dadurch gekennzeichnet, daß die in der Lagerbohrung (38) des Hochdruckwellenzapfens (1) angebrachten Nuten (40) schraubenförmig ausgebildet sind.

6. Mehrwellenturbomaschine mit einem Zwischenwellenlager (15) nach einem der Ansprüche 1 bis 5, dadurch gekennzeichnet, daß die Ventilationsluft des Zwischenwellenlagers (15), die durch eine von dem Innenring (19) des Rollenlagers (16) auf der in Bezug auf die Zirkulationsrichtung der Gase in der Turbomaschine stromaufwärts gelegenen Seite getragene Labyrintdichtung (35) hindurchtritt, unter dem Innenring (19) gelegene Längsnuten (29) passiert und den genannten Innenring (19) durch stromaufwärts und stromabwärts gelegene radiale Durchgänge (30 bzw. 31) durchdringt, derart daß der Innenring (19) des Rollenlagers während der Betriebsphasen der Turbomaschine mit maximalen Drehzahlen erwärmt wird.

7. Mehrwellenturbomaschine mit einem Zwischenwellenlager (15) nach einem der Ansprüche 1 bis 6, dadurch gekennzeichnet, daß das die Nuten (40, 40a) und die Bohrungen (43, 43a) des Hochdruckwellenzapfens (1) speisende kalte Öl von einer Spritzdüse verteilt wird, die das Öl zu dem Mantel (8) einer Zentrifugalölschleuder (6) führt, welche an dem stromabwärts gelegenen Seite des Niederdruckwellenzapfens (2) montiert ist und in der der Ölring durch longitudinale Trennwände (9) in zwei Kreise geteilt ist, wobei ein erster Kreis von einem auf dem Niederdruckwellenzapfen (2) gelegenen ersten ringförmigen Sammelraum (10) aus durch Bohrungen (11) des Niederdruckwellenzapfens (2) ein Traglager (4) speist, in welchem der Niederdruckwellenzapfen (2) gegenüber einem festen Tragteil (3) gelagert ist, und wobei der zweite Kreis von einem dem ersten Sammelraum (10) benachbarten, auf dem Niederdruckwellenzapfen (2) gelegenen zweiten ringförmigen Sammelraum (12) aus durch in diesem Niederdruckwellenzapfen (2) vorgesehene Bohrungen (13) einen dritten, in Höhe des Zwischenwellenlagers (15) gelegenen ringförmigen Sammelraum (14) speist, von dem aus ein Teil des Öls durch Zentrifugalkraft durch radiale Bohrungen (22) des Innenrings (19) des Rollenlagers (16) zu einem ringförmigen Sitz (21) der stromabwärts gelegenen Spannmutter (20) des Außenrings (18) des Rollenlagers (16) dringt, der die genannten Nuten (40, 40a) und die genannten Bohrungen (43, 43a) des Hochdruckwellenzapfens (1) durch in der genannten Spannmutter (20) vorgesehene Bohrungen (41) speist.

8. Mehrwellenturbomaschine mit einem Zwischenwellenlager (15) nach einem der Ansprüche 1 bis 7, dadurch gekennzeichnet, daß der auf dem Niederdruckwellenzapfen (2) und unter dem Innenring (19) des Rollenlagers (16) gelegene dritte ringförmige Sammelraum (14) longitudinale Trennwände (23) aufweist, die in dem genannten Innenring (19) angebracht sind und eine Aufteilung des Öls für die Speisung des Hochdruckwellenzapfens (1) und einen Schmierungskreis für das Zwischenwellenlager (15) bewirken, in dem das Öl durch Längsnuten (26) des Niederdruckwellenzapfens (2) in einen vierten Sammelraum (27) geleitet wird, der auf dem Niederdruckwellenzapfen (2) unter dem Innenring (19) liegt, und von dem aus das Öl die Rollen (17) durch radiale Bohrungen (28) des Innenrings (19) und durch Zentrifugalkraft den Außenring (18) des Rollenlagers (16) erreicht.

9. Mehrwellenturbomaschine mit einem Zwischenwellenlager (15) nach einem der Ansprüche 1 bis 8, dadurch gekennzeichnet, daß das Öl am Ausgang der zweiten Reihe von internen Bohrungen (43, 43a) des Hochdruckwellenzapfens sowie am Ausgang von das Schmieröl des Zwischenwellenlagers (15) an der Lagerbohrung (38) des Hochdruckwellenzapfens aufnehmenden Kanälen (39) über in dem Niederdruckwellenzapfen (2) vorgesehene Durchgänge (46) stromabwärts einen Raum (47) für die Ölrückgewinnung erreicht.

FIG:1

FIG: 2

FIG: 5

FIG: 6

FIG: 3

FIG: 4

FIG: 7